# EUROPEAN PATENT APPLICATION

(11) **EP 4 319 366 A1**
(43) Date of publication of application: **07.02.2024**
(21) Application number: 21933008.1
(22) Date of filing: 24.03.2021
(51) Int. Cl.: H04W 72/04

(54) **COMMUNICATION DEVICE AND TRANSMISSION METHOD**

(71) Applicant: NTT DOCOMO, INC., Chiyoda-ku Tokyo 100-6150 (JP)
(72) Inventor: OKANO, Mayuko, Tokyo 100-6150 (JP); KUMAGAI, Shinya, Tokyo 100-6150 (JP); YOSHIOKA, Shohei, Tokyo 100-6150 (JP); OKAMURA, Masaya, Tokyo 100-6150 (JP); TAKAHASHI, Yuki, Tokyo 100-6150 (JP); MATSUMURA, Yuki, Tokyo 100-6150 (JP)
(74) Representative: Hoffmann Eitle
(86) International application number: PCT/JP2021/012393
(87) International publication number: WO 2022/201398

(57) **Abstract**

A communication apparatus including: a control unit configured to include, in a preamble, information of a resource of a signal to which the preamble is added, or to determine a resource, as a resource to be used for transmission of the preamble, for notifying a resource of the signal; and a transmission unit configured to transmit the preamble.

## Description

### [FIELD OF THE INVENTION]

The present invention relates to a communication apparatus in a wireless communication system.

### BACKGROUND ART

In 3GPP (3rd Generation Partnership Project), a wireless communication system (hereinafter referred to as "NR") called 5G or NR (New Radio) is being studied in order to realize further increase of system capacity, further increase of data transmission speed, and further decrease of delay in the wireless section. In 5G, various wireless technologies and network architectures are being studied (e.g., Non-Patent Document 1) in order to achieve a throughput of 10 Gbps or higher and to satisfy the requirement that delay in the wireless section should be 1 ms or less.

Further, 6G has been studied as a next-generation wireless communication system of 5G, and realization of wireless qualities exceeding 5G is expected. For example, in 6G, studies are underway toward realization of higher capacities, use of new frequency bands, lower delay, higher reliability, extension of coverage in new regions (high altitude, sea, space), and the like (for example, Non-Patent Document 2).

### [Prior Art Document]

### [Non Patent Literature]

[Non-Patent Document 1] 3GPP TS 38.300 V16. 3.0 (2020-09)
[Non-Patent Document 2] NTT DoCoMo White Paper Advancement of 5G, and 6G (2020-01)

### SUMMARY OF THE INVENTION

### [Problems to be Solved by the Invention]

In 6G, it is expected to use higher frequencies than ever before in order to further improve communication speed, capacity, reliability, delay performance, and the like. When the high frequency is used, a wide bandwidth can be used, and the radio wave has high linearity and low frequency selectivity. In addition, the high frequency has characteristics that Doppler shift is large and pathloss is large.

Due to characteristics of a frequency band using the high frequency, a control rule different from conventional cell design or a conventional scheduling technique by a base station may be more desirable in terms of network performance.

For example, it is conceivable to perform communication control of a desired signal by using a preamble without performing conventional scheduling. However, in the related art, there is no specific proposal regarding communication control using a preamble.

The present invention has been made in view of the above circumstances, and an object of the present invention is to provide a technique that enables control of communication by using a preamble in a wireless communication system.

### [Means for solving the problem]

According to the technology disclosed herein, there is provided a communication apparatus including:
a control unit configured to include, in a preamble, information of a resource of a signal to which the preamble is added, or to determine a resource, as a resource to be used for transmission of the preamble, for notifying a resource of the signal; and
a transmission unit configured to transmit the preamble.

### [Effects of the Invention]

According to the technology disclosed herein, there is provided a technology that enables control of communication by using a preamble in a wireless communication system.

### BRIEF DESCRIPTION OF THE DRAWINGS

[Fig. 1] FIG. 1 is a diagram for explaining an example (1) of a wireless communication system according to an embodiment of the present invention;
[Fig. 2] FIG. 2 is a diagram for explaining an example (2) of the wireless communication system according to an embodiment of the present invention;
[Fig. 3] FIG. 3 is a diagram showing an example of scheduling;
[Fig. 4] FIG. 4 is a diagram for explaining Example 1-1;
[Fig. 5] FIG. 5 is a diagram for explaining Example 1-1;
[Fig. 6] FIG. 6 is a diagram for explaining Example 1-3;
[Fig. 7] FIG. 7 is a diagram for explaining Example 1-3;
[Fig. 8] FIG. 8 is a diagram for explaining Example 1-3;
[Fig. 9] FIG. 9 is a diagram for explaining Example 2-1;
[Fig. 10] FIG. 10 is a diagram for explaining Example 2-1;
[Fig. 11] FIG. 11 is a diagram for explaining Example 2-2;
[Fig. 12] FIG. 12 is a diagram for explaining Example 2-2;
[Fig. 13] FIG. 13 is a diagram for explaining Example 2-2;
[Fig. 14] FIG. 14 is a diagram for explaining Example 2-2;
[Fig. 15] FIG. 15 is a diagram for explaining Example 2-3;
[Fig. 16] FIG. 16 is a diagram for explaining Example 3-2;
[Fig. 17] FIG. 17 is a diagram for explaining Example 3-2;
[Fig. 18] FIG. 18 is a diagram for explaining Example 3-2;
[Fig. 19] FIG. 19 is a diagram for explaining Example 3-2;
[Fig. 20] FIG. 20 is a diagram for explaining Example 3-2;
[Fig. 21] FIG. 21 is a diagram for explaining Example 3-3;
[Fig. 22] FIG. 22 is a diagram for explaining Example 3-3;
[Fig. 23] FIG. 23 is a diagram showing an example of a functional configuration of a base station 10 according to an embodiment of the present invention;
[Fig. 24] FIG. 24 is a diagram showing an example of a functional configuration of a terminal 20 according to an embodiment of the present invention;
[Fig. 25] FIG. 25 is a diagram showing an example of a hardware configuration of a base station 10 or a terminal 20 according to an embodiment of the present invention.

### DETAILED DESCRIPTION OF THE INVENTION

Hereinafter, embodiments of the present invention will be described with reference to the drawings. The embodiments described below are examples, and the embodiments to which the present invention is applied are not limited to the following embodiments.

In operating a wireless communication system according to an embodiment of the present invention, existing techniques may be used as appropriate. The existing technology is, for example, an existing NR or LTE, but is not limited to an existing NR or LTE.

### (System Configuration)

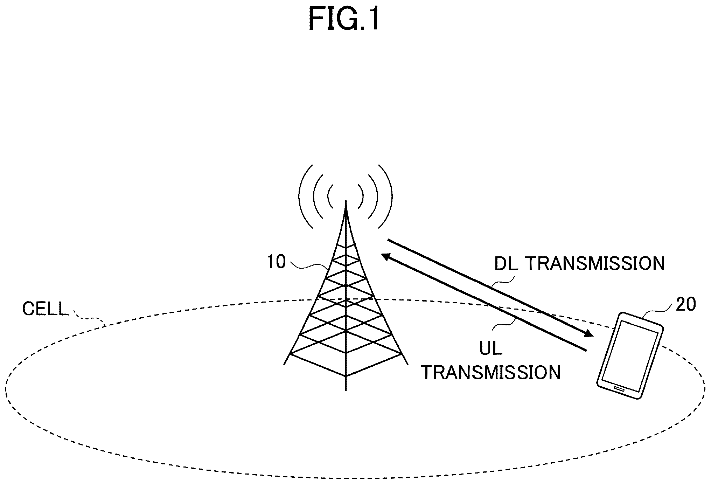

Fig. 1 is a diagram illustrating an example (1) of a wireless communication system according to an embodiment of the present invention. The wireless communication system in an embodiment of the present invention includes a base station 10 and a terminal 20, as shown in FIG. 1. In FIG. 1, one base station 10 and one terminal 20 are shown, but this is an example and a plurality of base stations 10 and a plurality of terminal 20 may be provided. The base station 10 and the terminal 20 may be collectively referred to as a communication apparatus.

The base station 10 is a communication device that provides one or more cells and performs wireless communication with the terminal 20. The physical resources of the radio signal are defined in the time domain and the frequency domain, the time domain may be defined in OFDM symbols, and the frequency domain may be defined in subcarriers or resource blocks. TTI (Transmission Time Interval) in the time domain may be a slot, or TTI may be a subframe.

The base station 10 can perform carrier aggregation for communicating with the terminal 20 by aggregating a plurality of cells (a plurality of CCs (component carriers)). Carrier aggregation uses one PCell (primary cell) and one or more SCells (secondary cells).

The base station 10 transmits synchronization signals and system information to the terminal 20. The synchronization signals are, for example, NR-PSS and NR-SSS. System information is transmitted, for example, by NR-PBCH or PDSCH, and is also called broadcast information. As shown in FIG. 1, the base station 10 transmits a control signal or data in DL (Downlink) to the terminal 20 and receives a control signal or data in UL (Uplink) from the terminal 20. Here, what is transmitted by a control channel such as PUCCH and PDCCH is called a control signal, and what is transmitted by a shared channel such as PUSCH and PDSCH is called data. However, this is an example.

The terminal 20 is a communication device with a wireless communication function, such as a smartphone, a cellular phone, a tablet, a wearable terminal, and a communication module for M2M (Machine-to-Machine). As shown in FIG. 1, the terminal 20 utilizes various communication services provided by a wireless communication system by receiving a control signal or data in DL from the base station 10 and transmitting a control signal or data in UL to the base station 10. The terminal 20 may be called a UE, and the base station 10 may be called a gNB.

The terminal 20 can perform carrier aggregation for communicating with the base station 10 by aggregating a plurality of cells (a plurality of CCs (component carriers)). Carrier aggregation uses one PCell (primary cell) and one or more SCells (secondary cells). Also, a PUCCH-SCell with a PUCCH may be used.

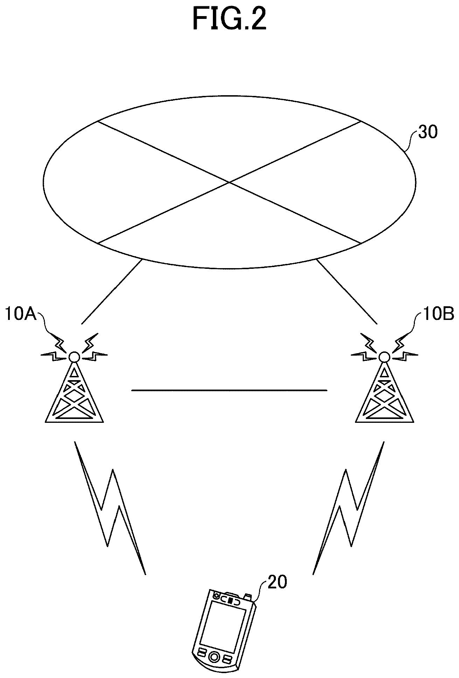

Fig. 2 is a diagram illustrating an example (2) of a wireless communication system according to an embodiment of the present invention. Fig. 2 shows an example of a configuration of a wireless communication system when DC (Dual connectivity) is executed. As shown in FIG. 2, a base station 10A serving as an MN (Master Node) and a base station 10B serving as an SN (Secondary Node) are provided. The base station 10A and the base station 10B are each connected to a core network. The terminal 20 can communicate with both the base station 10A and the base station 10B.

The cell group provided by the base station 10A that is an MN is called MCG (Master Cell Group), and the cell group provided by the base station 10B that is an SN is called SCG (Secondary Cell Group). In addition, in DC, the MCG is composed of one PCell and one or more SCells, and the SCG is composed of one PSCell (Primary SCell) and one or more SCells.

Note that DC may be a communication method using two communication standards, and any communication standards may be combined. For example, the combination may be any one of NR and 6G standards, and LTE and 6G standards. DC may be a communication method using three or more communication standards and may be referred to by a name different from DC .

The processing operation in the present embodiment may be executed by the system configuration shown in FIG. 1, may be executed by the system configuration shown in FIG. 2, or may be executed by a system configuration other than these.

Here, in 6G, in order to further improve communication speed, capacity, reliability, delay performance, and the like, it is assumed that frequencies higher than those in the related art are used. When the high frequency is used, a wide bandwidth can be used, and the radio wave has high linearity and low frequency selectivity. In addition, the high frequency has characteristics that Doppler shift is large and pathloss is large.

Due to characteristics of a frequency band using the high frequency, a control rule different from a conventional cell design or a conventional scheduling technique by a base station may be more desirable in terms of network performance. For example, it is assumed that DL-to-DL, DL-to-UL, and UL-to-UL collision avoidance and inter-cell interference reduction are not as necessary as conventional lower frequencies.

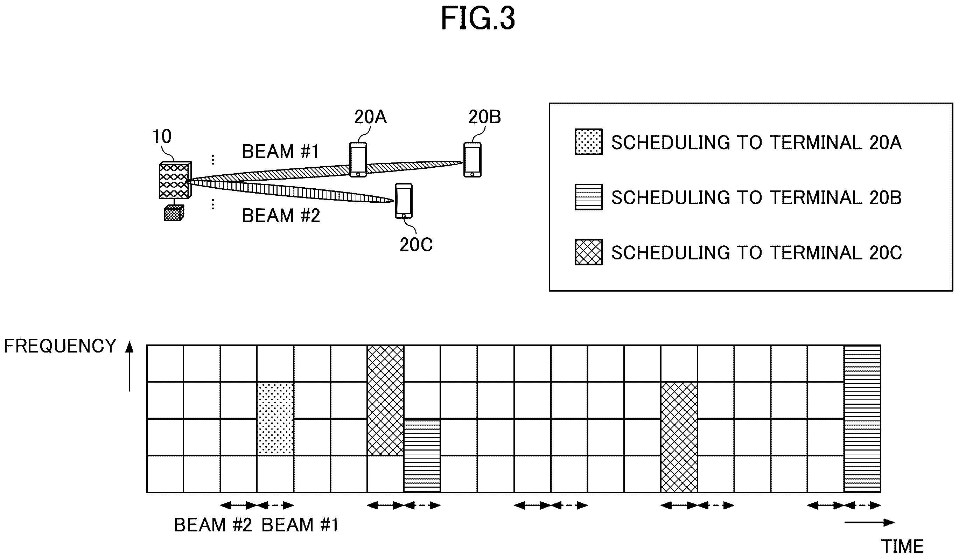

FIG. 3 is a diagram illustrating an example of scheduling. In the example illustrated in FIG. 3, beamforming of the base station 10 is realized in an analog manner, and scheduling by time division multiplexing (TDM) is executed for each beam. As shown in FIG. 3, beam #1 and beam #2 are multiplexed by TDM. In the example illustrated in FIG. 3, the base station 10 perform scheduling by TDM on the terminal 20A and the terminal 20B using the beam #1, and the terminal 20C using the beam #2. When the terminal 20 is explicitly or implicitly notified of at which timing the base station 10 performs DL transmission and UL reception using each beam, the terminal 20 may perform DL reception and UL transmission only at a timing at which a beam to be used by the terminal 20 is used. Also, when the base station 10 is explicitly or implicitly notified of at which timing the terminal 20 performs DL reception and UL transmission, the base station 10 may perform DL transmission and UL reception using a beam used for communication with the terminal 20 only at the timing.

As a control rule that does not depend on scheduling, for example, the following control rule A) and control rule B) are conceivable.

Control Rule A) A transmission-side apparatus, which is the base station 10 or the terminal 20, transmits a signal at free timing. A reception-side apparatus, which is the base station 10 or the terminal 20, needs to perform detection of a signal at all timings in which the signal can be received. When a collision of resources used for transmission occurs, a process equivalent to a decoding error is performed, and retransmission by feedback may be executed. In a frequency band using a frequency higher than that in the related art, since a beam is extremely narrow and an area is also narrow, the number of terminals 20 existing in a certain beam is extremely small, and even in a case where scheduling is not executed by the base station 10, it is assumed that the collision probability of resources used for transmission is low.

Control Rule B) A transmission-side apparatus, which is the base station 10 or the terminal 20, acquires transmission right to perform signal transmission. That is, each of the base station 10 and the terminal 20 performs signal transmission after performing intra-system LBT (Listen before talk). A reception-side apparatus, which is the base station 10 or the terminal 20, needs to perform detection of a signal at all timings in which a signal can be received. Collision of resources used for transmission is avoided by intra-system LBT. In a frequency band using a frequency higher than that of the related art, in addition to the fact that the resource collision probability is low, in the control rule B, the system can operate to detect in advance a resource collision that rarely occurs due to interference within the same beam or between cells and to avoid the collision.

In both the control rule A and the control rule B, there may be a case where there is frame synchronization and there is no frame synchronization. Hereinafter, a control rule with frame synchronization is referred to as a control rule A1 or a control rule B1, and a control rule without frame synchronization is referred to as a control rule A2 or a control rule B2.

In particular, in the control rule A2 and the control rule B2, communication may be controlled using a preamble. Therefore, study on the preamble is necessary.

Hereinafter, an embodiment related to the preamble will be described by focusing on techniques on the preamble in the control rule A2 and the control rule B2. More specifically, for example, an embodiment will be described in which a transmission node performs transmission timing notification to another node (terminal) other than a reception node or performs reception timing notification to the reception node, by adding a preamble to a transmission signal.

### (SUMMARY)

First, an outline of the present embodiment will be described. In the description of the present embodiment, each of the "transmission node" and the "reception node" may be a base station 10, or a terminal 20. That is, both the base station 10 and the terminal 20 serve as a transmission node and a reception node. However, in the following description, examples of whether the base station 10 is assumed or the terminal 20 is assumed are described as appropriate. The "transmission node" and the "reception node" may be collectively referred to as a communication apparatus.

In the present embodiment, each of the following Examples 1 to 4 will be described as a detailed example. Examples 1 to 4 can be arbitrarily combined.

In the following description, "A / B" means "A or B, or A and B" unless otherwise specified. "A and B" means both A and B. "A/B/C" means "A or B or C, or, A or (B and C), or, A and (B or C), or, B or (A and C), or, B and (A or C), or, C or (A and B), or, C and (A or B), or, A, B and C".

In the Example 1, examples of operations related to preamble reception will be described, including terminal operation in which a terminal uses a result of preamble reception/detection to determine whether a control signal/a data signal corresponding/related to the preamble is addressed to the terminal or not.

In Example 2, an example of a resource designation method using a preamble will be described. In Example 3, an example of sequence design of a preamble will be described. In Example 4, an example of information to be notified using a preamble will be described.

In the following description of Examples, a control signal and a data signal are mainly used as types of signals, but these are merely examples. Signals (for example, reference signal, synchronization signal, feedback signal) other than the control signal and the data signal may be used in addition to or in place of the control signal/the data signal.

Further, a signal described as "preamble" below may be referred to by a name other than "preamble". For example, the "preamble" may be referred to as a detection signal, an advance signal, or a signal notification signal. Hereinafter, each Example will be described in detail.

### (Example 1)

In Example 1, Example 1-1, Example 1-2, and Example 1-3 will be described as operations of a reception node that receives a preamble.

### <Example 1-1>

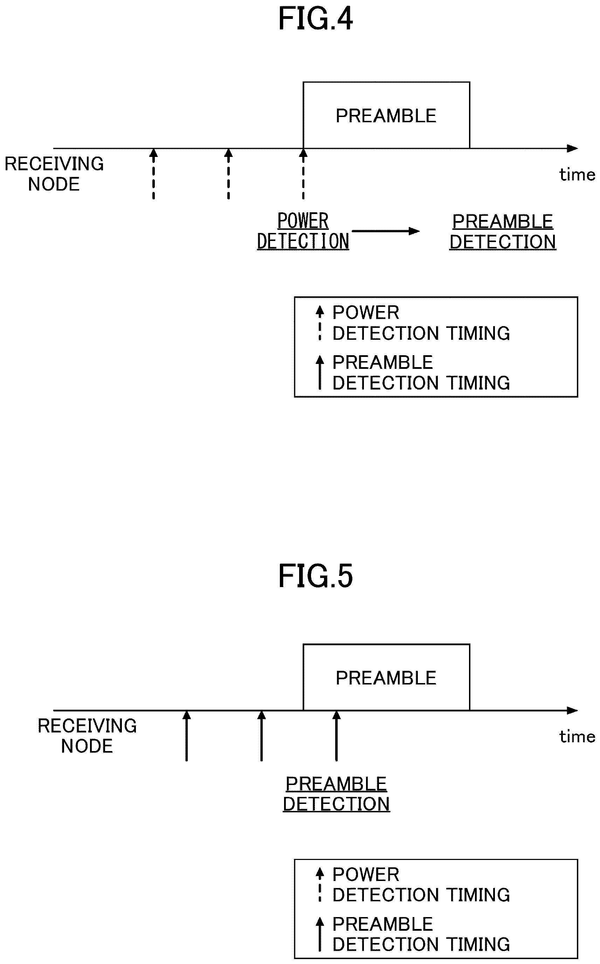

In the Example 1-1, the reception node performs correlation detection of a preamble when detecting power of a reception signal. The operation of the reception node in the Example 1-1 will be described with reference to FIG. 4. As shown in FIG. 4, the reception node performs power detection operation at a power detection timing. When the reception node detects power at a certain power detection timing, the reception node performs correlation detection of the preamble using the power detection as a trigger.

For example, the "timing / period / cycle" at which a reception node performs power detection is defined in the specification, the reception node holds configuration information based on the specification, and performs power detection operation for a defined period at the defined timing / cycle based on the configuration information.

Also, for example, "timing / period / cycle" for performing power detection may be configured by DCI / higher layer signal (example : MAC CE / RRC signal) from a transmission node (for example, base station 10) to a reception node, and the reception node may hold configuration information by the configuration and perform the power detection operation only for the configured period at the configured timing / cycle based on the configuration information.

The reception node measures "power / amplitude value" of the reception signal during a period in which preamble detection by power detection is performed, and performs preamble correlation detection when, for example, power / amplitude equal to or greater than a threshold is received. The threshold may be defined in the specification, or may be notified from the base station 10 to the reception node by a DCI / a higher layer signal.

### <Example 1-2>

In the Example 1-2, the reception node performs preamble correlation detection without performing power detection. The operation of the reception node in the embodiment 1-2 will be described with reference to FIG. 5. As shown in FIG. 5, the reception node performs a preamble detection operation by correlation detection at a preamble detection timing. FIG. 5 shows that a preamble is detected at a certain preamble detection timing.

For example, "timing / period / cycle" at which the reception node performs preamble detection is defined in the specification, the reception node holds configuration information based on the specification, and performs preamble detection operation only for the defined period at the defined timing / cycle based on the configuration information.

In addition, for example, "timing / period / cycle" for performing preamble detection may be configured from the base station 10 to the reception node by DCI / higher layer signal (example : MAC CE / RRC signal), and the reception node may hold configuration information by the configuration and perform the preamble detection operation only for the configured period at the configured timing / cycle based on the configuration information.

For example, the reception node generates (replicas of) a plurality of transmission signal sequences that can be received, and detects a correlation with a reception signal to perform preamble detection.

According to the Examples 1-1 and 1-2, since the detection operation is performed during a specific period, efficient preamble detection can be performed.

### <Example 1-3>

In Example 1-3, it is assumed that all reception nodes (here, terminals are assumed as an example) perform preamble detection operation (examples: Example 1-1 and Example 1-2). Hereinafter, a case where the preamble does not include information related to a destination and a case where the preamble includes information related to a destination will be described.

### - A case where the preamble does not include information related to a destination

In this case, the reception node specifies a resource of any one signal of "a control signal, a data signal, a reference signal, and a feedback signal" or resources of a plurality of signals of these signals according to a preamble detection result, and performs demodulation. For example, when the preamble includes information on the resource, the reception node may identify the resource from the preamble and demodulate one or more of the control signal, the data signal, the reference signal, and the feedback signal. Note that details of a method of designating a resource using a preamble will be described in examples described later.

By performing the above-described operation when the preamble does not include information related to a destination, the reception node can grasp a resource used by another node, or resource reservation information, or the like, and thus can control its own transmission.

### -A case where information related to a destination is included in a preamble

When the reception node detects that the preamble is addressed to itself from information of a destination included in a detected preamble, the reception node performs an operation of receiving a control signal / a data signal or the like following the preamble. The reception node that detects that the preamble is addressed to itself may be referred to as a destination node.

Specifically, the destination node specifies any one or a plurality of resources of "a control signal, a data signal, a reference signal, and a feedback signal" according to the preamble detection result and performs demodulation.

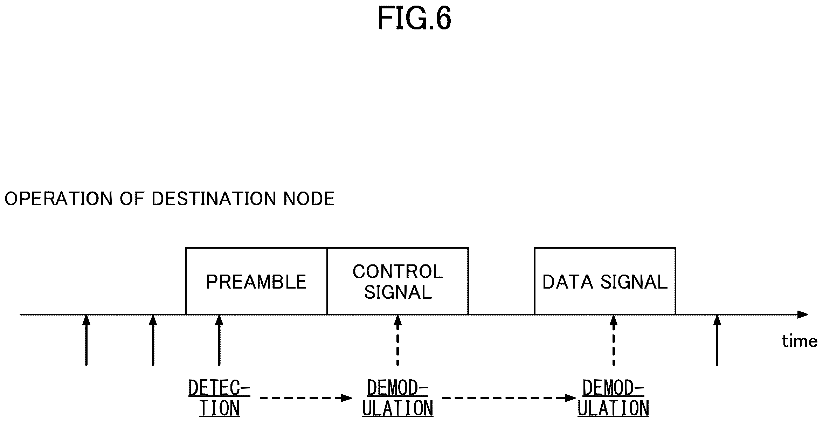

An operation example in this case is shown in FIG. 6. In the example of FIG. 6, when a destination node detects a preamble, the destination node specifies a resource of a control signal based on the preamble to demodulate the control signal, specifies a resource of a data signal based on the control signal, and demodulates the data signal.

When the reception node detects that the preamble is not addressed to the reception node based on the information of a destination included in the detected preamble, reception operation of a control signal / a data signal following the preamble includes the following options 1 and 2.

### Option 1)

When the reception node (a node other than a destination node) cannot specify a resource of a signal to which a preamble is added (a signal subsequent to the preamble) by preamble detection, the reception node specifies one or more resources of "a control signal, a data signal, a reference signal, and a feedback signal" and performs demodulation. Accordingly, the reception node can recognize a resource of a signal transmitted by the base station or another terminal, and can determine whether or not to transmit its own signal. Note that any method may be used as the method of specifying the resource. For example, blind detection may be performed.

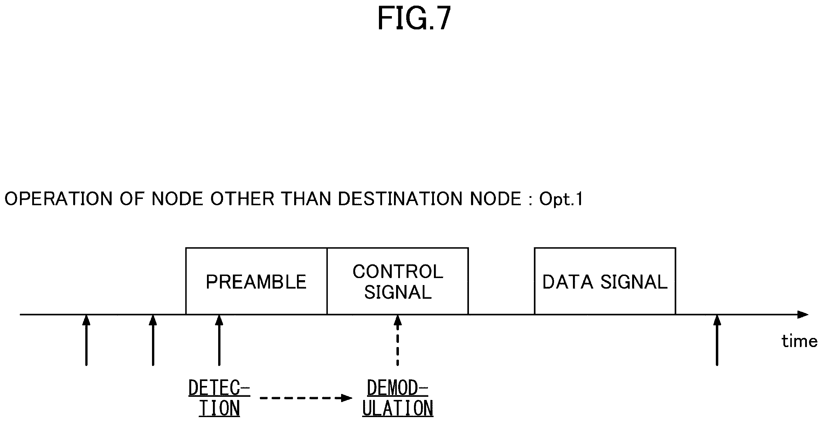

An operation example in option 1 is shown in FIG. 7. In the example shown in FIG. 7, although a preamble is detected, since a resource of a control signal cannot be specified from the preamble, the resource of the control signal is specified by another method to demodulate the control signal. Here, since a resource of a data signal can be specified from the control signal, demodulation of the data signal is not performed.

### Option 2)

The reception node (a node other than the destination node) may not perform demodulation for any signal among the "control signal, data signal, reference signal, and feedback signal" when a resource of a signal to which the preamble is added (the signal following the preamble) can be specified by preamble detection. The reception node can recognize a resource of a signal transmitted by the base station or another terminal by the preamble, and can determine whether or not to transmit its own signal.

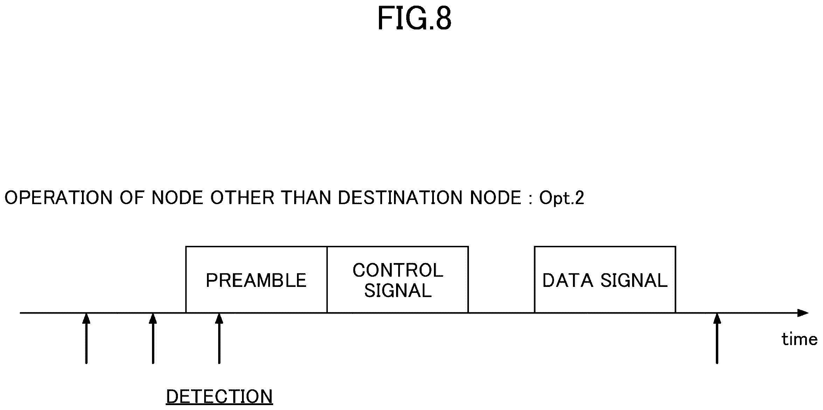

An operation example in option 2 is shown in FIG. 8. In the example illustrated in FIG. 8, since resources of the control signal and the data signal can be specified by detecting the preamble, demodulation of any signal is not performed.

### (Example 2)

Next, Example 2 will be described. In the Example 2, a resource designation method using a preamble will be described. Examples 2-1 to 2-3 will be described below.

### <Example 2-1>

In the Example 2-1, a transmission node gives a preamble to a data signal and notifies a resource of the data signal in the preamble. The transmission node may notify the resource of the data signal by a sequence of the preamble or may notify the resource of the data signal by a resource of the preamble. When the resource of the data signal is notified by the resource of the preamble, for example, a correspondence relationship in which resource A of the preamble corresponds to resource B of the data signal is defined, and when the transmission node transmits the data signal by the resource B, the transmission node transmits the preamble by the resource A based on the correspondence relationship.

That is, the transmission node, for example, by the control unit thereof, includes information of a resource of a signal to which a preamble is to be added in the preamble, or the transmission node determines a resource for notifying a resource of the signal as a resource to be used for transmission of the preamble.

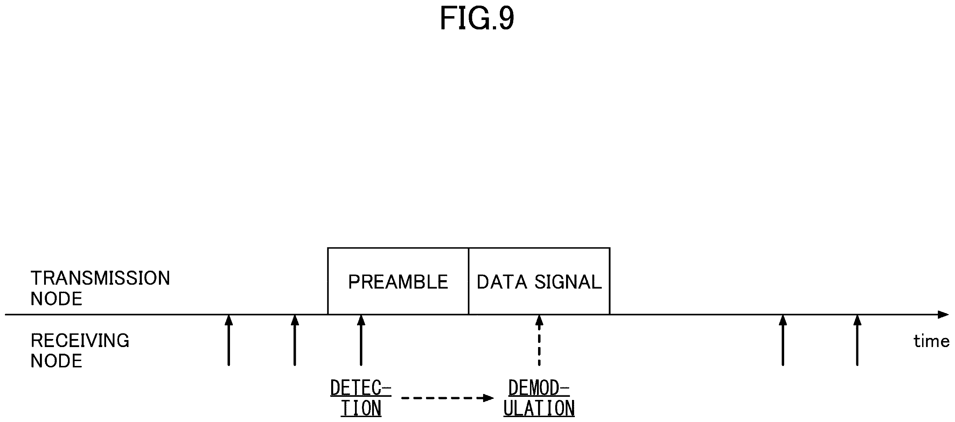

Here, a resource of a preamble and a resource of a data signal may or may not be contiguous in the time direction. FIG. 9 shows an operation example in the case where the resource of the preamble and the resource of the data signal are continuous in the time direction. In the example of FIG. 9, the transmission node transmits the preamble and the data signal consecutively. The reception node specifies the resource of the data signal from the detected preamble and demodulates the data signal.

When the preamble resource and the data signal resource are discontinuous, the resource of the data signal may be set after a predetermined time from the end of the preamble. The predetermined time may be defined by a specification or may be configured by higher layer signaling. For example, the predetermined time may be configured by higher layer signaling from the base station 10 to the terminal 20.

When the resource of the preamble and the resource of the data signal are contiguous, a field indicating the start of the data signal may be present between the preamble and the data signal. For example, a known sequence may be inserted at the end of the preamble, and the known sequence may indicate the start of the data signal.

The length (time length) of the data signal may be any one of "burst transmission (not designated), fixed to a constant value in advance by specifications, notified by a preamble, and notified by a higher layer for each terminal or cell", or may be a combination of any two or more of these.

The transmission node may transmit a data signal without adding a preamble except for initial transmission of the data signal. For example, the transmission node may perform such transmission when continuously performing data transmission within a predetermined time. In addition, the transmission node may perform such transmission by explicitly indicating in the preamble that "transmit a data signal without adding a preamble except for initial transmission of the data signal".

In the case of performing the transmission as described above, a resource of a data signal to which a preamble is not added may be designated in the preamble of initial transmission or may be determined in association with a data signal resource immediately before the signal.

Also, when the reception node receives a data signal to which a preamble is not added, the reception node may not perform preamble detection during reception of a plurality of data signals.

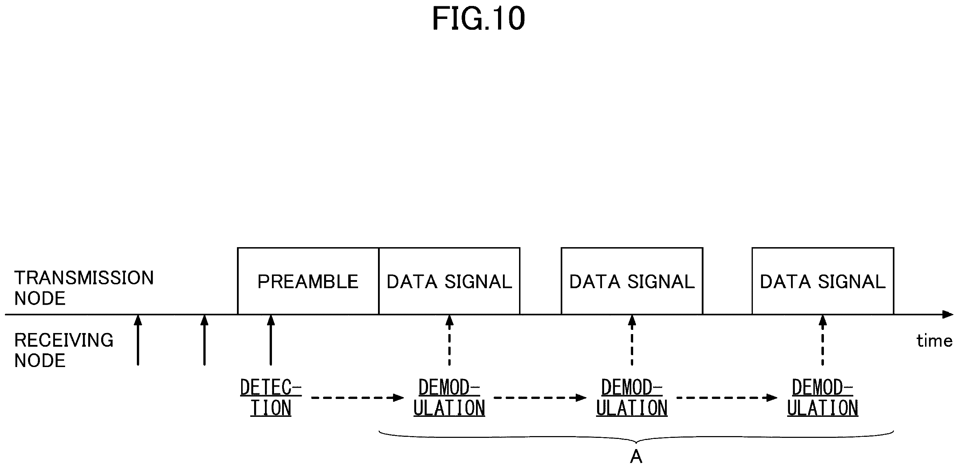

FIG. 10 illustrates an operation example in a case where the transmission node transmits a data signal without adding a preamble except for initial transmission of the data signal. In the example of FIG. 10, the reception node specifies a resource of the data signal immediately after the preamble from the preamble to demodulate the data signal, and specifies the resource of the subsequent data signal from the data signal to perform demodulation. In the example of FIG. 10, for example, in the period indicated by A, the reception node may not perform preamble detection.

For example, preamble detection may be performed during the period indicated by A in FIG. 10. When a preamble is detected by performing preamble detection, a resource of a data signal designated by the preamble may overlap with a resource of another data signal (e.g., one of the data signals shown in the period A in FIG. 10). If the resources overlap, the reception node may drop any one or more of the data signals with overlapping resources based on priority. The dropping method includes the following options 1 and 2.

Option 1) The priority is determined in the specification, and based on this, the reception node determines which data signal it will not attempt to receive. For example, when a data signal caused by a preamble received earlier has priority, reception of the data signal caused by the preamble received later is dropped.

Option 2) A transmission node of a preamble gives priority and a reception node determines a data signal that the reception node does not attempt to receive based on the priority. The priority may be given to the preamble or to the data signal.

According to the Example 2-1, it is possible to appropriately perform reception of a data signal using a preamble.

### <Example 2-2>

In the Example 2-2, the transmission node gives a preamble to a control signal, notifies a resource of the control signal in the preamble, and notifies a resource of the data signal / control signal in the control signal. The transmission node may notify a resource of the control signal by a sequence of the preamble or may notify the resource of the control signal by a resource of the preamble.

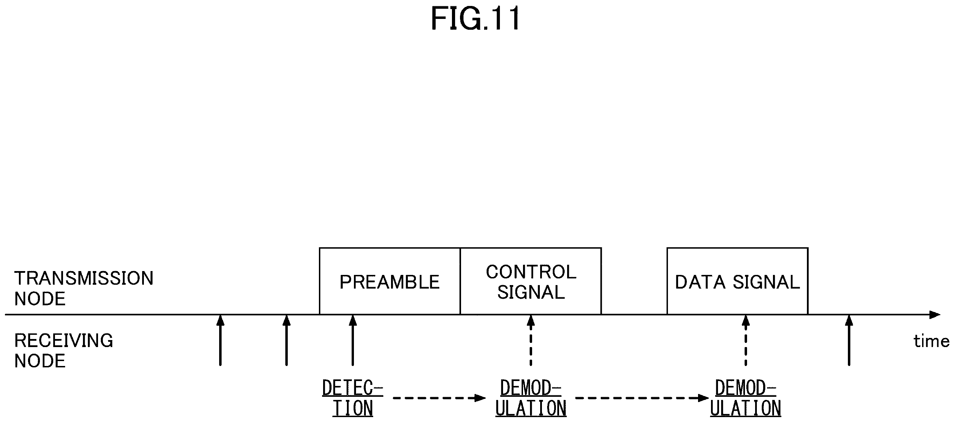

Here, a resource of a preamble and a resource of a control signal may or may not be continuous in the time direction. FIG. 11 illustrates an operation example in a case where the resource of the preamble and the resource of the control signal are continuous in the time direction. In the example of FIG. 11, the transmission node continuously transmits the preamble and the control signal. The reception node specifies a resource of the control signal from the detected preamble and demodulates the control signal. Further, the reception node identifies a resource of the data signal from the demodulated control signal and demodulates the data signal. The next target of demodulation of the control signal may be a control signal.

When the resource of the preamble and the resource of the control signal are discontinuous, the resource of the control signal may be set after a predetermined time from the end of the preamble. The predetermined time may be defined by a specification or may be configured by higher layer signaling. For example, the predetermined time may be configured by higher layer signaling from the base station 10 to the terminal 20.

When the resource of the preamble and the resource of the control signal are contiguous, a field indicating the start of the control signal may be present between the preamble and the control signal. For example, a known sequence may be inserted at the end of the preamble, and the start of the control signal may be indicated by the known sequence.

The length (time length) of the control signal may be any one of "burst transmission (not designated), fixed to a fixed value in advance by specifications, notified by a preamble, and notified by a higher layer for each terminal or cell", or may be a combination of any two or more of these.

The transmission node may transmit a control signal / a data signal without adding a preamble except for initial transmission of the control signal. For example, the transmission node may perform such transmission when transmitting the control signal / data signal continuously within a predetermined time. In addition, the transmission node may perform such transmission by explicitly indicating in the preamble or the control signal that "transmit the control signal / data signal without adding the preamble except for initial transmission of the control signal".

In the case of performing transmission as described above, there are the following options 1 and 2 for notification of a resource of a control signal / a data signal to which a preamble is not added.

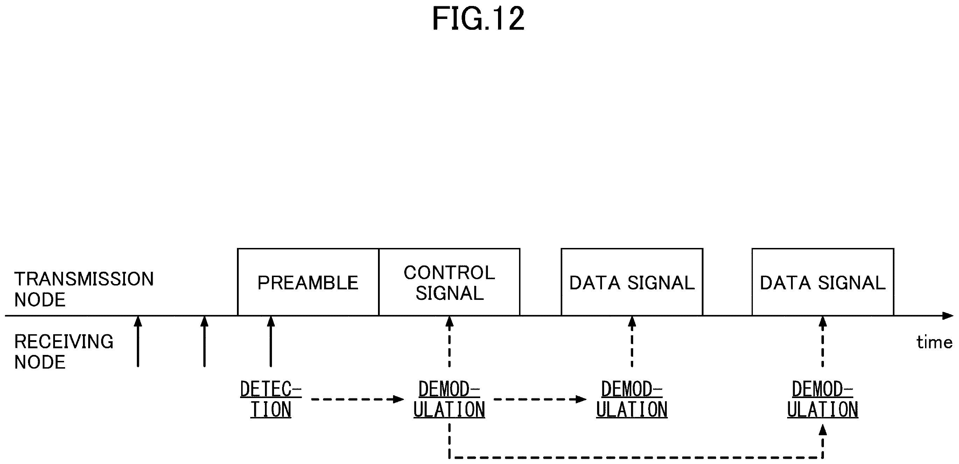

Option 1) A resource of a control signal / data signal to which a preamble is not added is designated in a preamble or a control signal of initial transmission. An operation example in option 1 is shown in FIG. 12. In the example of FIG. 12, the transmission node notifies the reception node of information of a resource of each subsequent data signal by a control signal transmitted after the preamble. The reception node demodulates the control signal based on the preamble, and demodulates each data signal after the control signal using the resource notified by the control signal.

Option 2) A resource of a certain control signal / data signal is determined in association with a resource of a control signal / data signal immediately before the certain control signal / data signal.

For example, a resource of a certain control signal / data signal may be determined as a resource after Xms from the end of a control signal / data signal immediately before the certain control signal data signal. "X" may be defined in the specification, may be configured from the base station 10 to the reception node by higher layer signaling, or may be notified from the transmission node to the reception node by physical layer signaling.

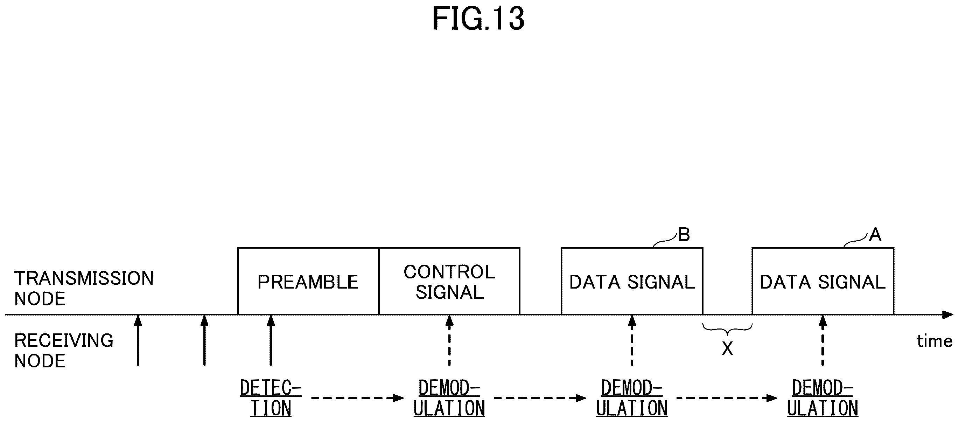

An operation example in this case is shown in FIG. 13. In the example of FIG. 13, the transmission node notifies the reception node of information of a resource of a data signal B by a control signal transmitted next to a preamble. The reception node demodulates the control signal based on the preamble, demodulates the data signal B after the control signal using the resource notified by the control signal, and demodulates the data signal A using the resource after Xms.

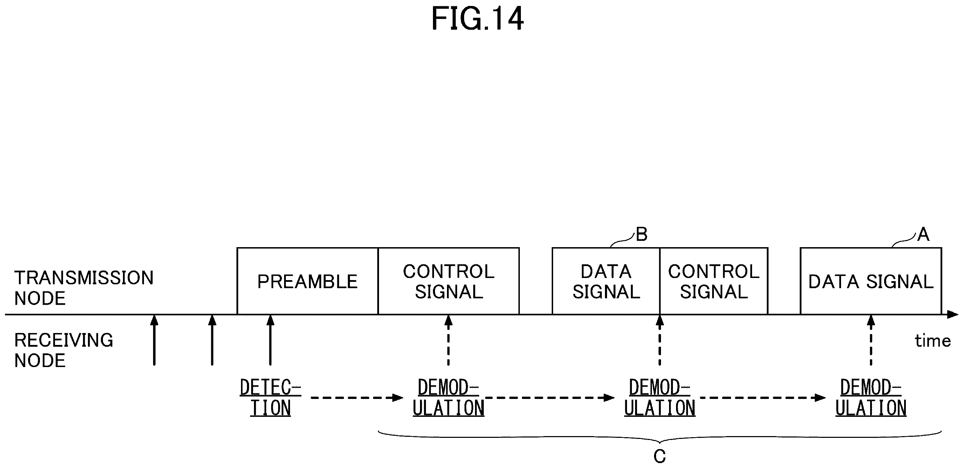

Also, for example, a control signal may be included in (or added to) a data signal immediately before a certain data signal, and a resource of the certain data signal may be designated in the control signal. FIG. 14 shows an operation example of this case. In the example illustrated in FIG. 14, the reception node demodulates a data signal A using a resource designated by a control signal added to a data signal B.

Also, when the reception node receives a control signal / a data signal to which a preamble is not added, the reception node may not perform preamble detection while receiving a plurality of control signals / data signals.

For example, referring to FIG. 14 as an example, the reception node may not perform preamble detection in the period indicated by C in FIG. 14.

Also, preamble detection may be performed during the period indicated by C in FIG. 14. When a preamble is detected by performing preamble detection, a resource of a control signal / a data signal designated by the preamble may overlap with a resource of another control signal / data signal (example : any of control signals / data signals shown in the period C in FIG. 14). When the resources overlap, the reception node may drop any one or more of the control signals / data signals with overlapping resources based on priority. The dropping method includes the following options 1 and 2.

Option 1) A priority is determined in a specification, and a signal which the reception node does not attempt to receive is determined based on the priority. For example, when a signal caused by a preamble received earlier has priority, reception of a signal caused by a preamble received later is dropped.

Option 2) The transmission node gives priority, and the reception node determines a signal which the reception node does not attempt to receive based on the priority. The priority may be given to a preamble, a data signal, or a control signal. For example, when the priority of a data signal for which a resource (referred to as resource X) is designated in a certain preamble is lower than the priority of a control signal for which resource X is designated in another preamble, the data signal is dropped and the control signal is demodulated.

According to the Example 2-2, it is possible to appropriately receive a control signal using a preamble.

### <Example 2-3>

In the Example 2-3, the transmission node gives a preamble to a "control signal + data signal", and a resource of "control signal + data signal" is notified by the preamble. The resource of "control signal + data signal" is a resource of the entire portion including the control signal and the data signal.

For example, resource mapping of the individual signals of the control signal and the data signal in the resource of the "control signal + data signal" may be configured in advance by the specification or may be notified from the base station 10 to the reception node by higher layer signaling. Also, a resource of only the control signal of "control signal + data signal" may be predetermined, and the resource of the data signal may be designated by the control signal.

The transmission node may notify the resource of "control signal + data signal" by a sequence of the preamble, or may notify the resource of "control signal + data signal" by a resource of the preamble.

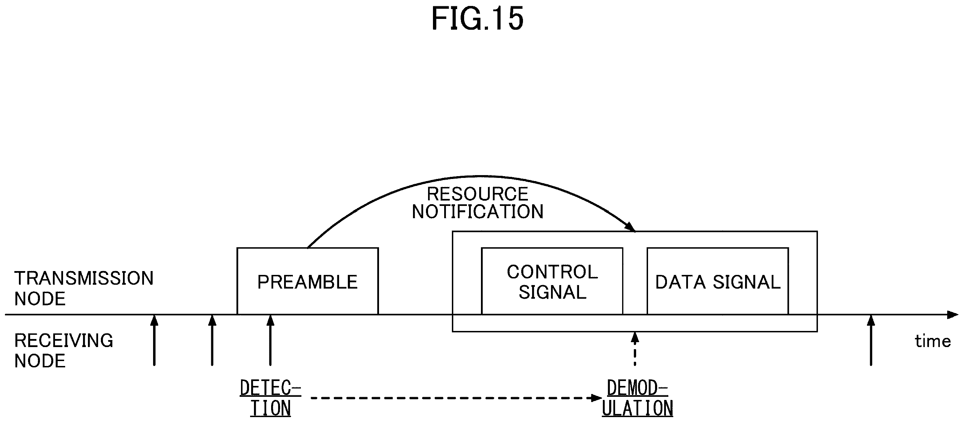

Here, the resource of the preamble and the resource of the "control signal + data signal" may or may not be continuous in the time direction. FIG. 15 illustrates an operation example in a case where the resource of the preamble and the resource of the "control signal + data signal" are not continuous in the time direction. In the example of FIG. 15, the transmission node transmits the "control signal + data signal" after the preamble. The reception node specifies the resource of "control signal + data signal" from the detected preamble, and demodulates the control signal and the data signal.

When the resource of the preamble and the resource of the "control signal + data signal" are discontinuous, the resource of the "control signal + data signal" may be set after a predetermined time from the end of the preamble. The predetermined time may be defined by a specification, may be configured by higher layer signaling, or may be notified by physical layer signaling. For example, the predetermined time may be configured by higher layer signaling from the base station 10 to the terminal 20.

When the resource of the preamble and the resource of the "control signal + data signal" are continuous, there may be a field indicating the start of the "control signal + data signal" between the preamble and the "control signal + data signal". For example, a known sequence may be inserted at the end of the preamble, and the start of the "control signal + data signal" may be indicated by the known sequence.

The transmission node may transmit the "control signal + data signal" without adding a preamble except for initial transmission of the "control signal + data signal". For example, the transmission node may perform such transmission when transmitting "control signal + data signal" continuously within a predetermined time. Also, the transmission node may perform such transmission by explicitly indicating in the preamble that "the control signal + data signal is transmitted without giving the preamble except for initial transmission of the control signal + data signal".

In the case of performing transmission as described above, there are following options 1 and 2 for notification of a resource of the "control signal + data signal" to which a preamble is not added.

Option 1) A resource of "control signal + data signal" to which no preamble is added is designated in a preamble of initial transmission or a control signal.

Option 2) A resource of a certain "control signal + data signal" is determined in association with a resource of a control signal / data signal immediately before the certain "control signal + data signal".

For example, a resource of a certain "control signal + data signal" may be determined as a resource after Xms from the end of a control signal / data signal immediately before the certain "control signal + data signal". "X" may be defined in the specification, may be configured from the base station 10 to the reception node by higher layer signaling, or may be notified from the transmission node to the reception node by physical layer signaling.

In addition, for example, a control signal may be included in (or added to) a data signal immediately before a certain "control signal + data signal", and a resource of the "control signal + data signal" may be designated in the control signal.

When the reception node receives a "control signal + data signal" to which no preamble is added, the reception node does not need to perform preamble detection while receiving a plurality of "control signal + data signal".

The reception node may perform preamble detection while receiving a plurality of "control signal + data signal". Here, when detection of a preamble is performed and the preamble is detected, there may occur a case where a resource of a control signal / data signal designated by the preamble overlaps with a resource of another control signal / data signal. When the resources overlap, the reception node may drop any one or more of the control signals / data signals with overlapping resources based on priority. The dropping method includes the following options 1 and 2.

Option 1) A priority is defined in a specification, and a signal which the reception node does not attempt to receive is determined based on the priority. For example, when a signal caused by a preamble received earlier has priority, reception of a signal caused by a preamble received later is dropped.

Option 2) The transmission node gives priority, and a signal which the reception node does not attempt to receive is determined based on the priority. The priority may be given to the preamble or may be given to the control signal / data signal.

### (Example 3)

Next, an example related to a preamble sequence design will be described as Example 3. Hereinafter, types of reference sequences will be described as Example 3-1, a user multiplexing method will be described as Example 3-2, and other examples will be described as Example 3-3.

### <Example 3-1: Type of Reference Sequence>

A sequence of a preamble transmitted by a transmission node (for example, the base station 10 or the terminal 20) may be a pseudo-random sequence, a Zadoff-chu sequence, a computer generated sequence, or a sequence other than these sequences.

The pseudo-random sequence may be, for example, a sequence given in 3GPP TS38. 211 section 5.2.1. The Zadoff-chu sequence may be, for example, a sequence as given in 3GPP TS 38.211 section 5.2.2.1. The computer generated sequence may be a sequence as given in 3GPP TS 38.211 section 5.2.2.2.

As the type of the reference sequence of the preamble transmitted by the transmission node, any one of the plurality of sequences may be used, or any two or more of the plurality of sequences may be used. In addition, the type of sequence to be used may be defined in the specification in accordance with the sequence length of the preamble to be transmitted, and the transmission node may select a sequence to be used in accordance with the definition. The "sequence length" may be a frequency resource length, may be a time length, may be a bit length, or may be another length.

As an example, the transmission node may use the computer generated sequence when the sequence length of the preamble to be transmitted is less than X, and may use the ZC sequence when the sequence length is equal to or greater than X. The value of "X" may be defined in the specification, or may be configured by higher layer signaling, for example, from the base station 10 to a transmission node (for example, a terminal).

Which type of reference sequence the transmission node uses may be determined by the specification or may be changed semi-statically / dynamically. The semi-static/dynamic change may be autonomously performed by the transmission node, or the change may be instructed to the transmission node by higher layer signaling.

Further, the transmission node may use different types of reference sequences depending on information included in a preamble to be transmitted. For example, reference sequence A is used when information on resources of a control signal / data signal is included in a preamble to be transmitted, and reference sequence B is used when information on resources is not included.

In addition, a set of reference sequences including one or more candidates of reference sequence used by the transmission node may be defined in the specification, and the transmission node may use a reference sequence selected from the set. Also, a set of reference sequences including one or more candidates of reference sequence to be used by a transmission node may be notified to the transmission node (e.g., a terminal) from, for example, the base station 20 by higher layer signaling, and the transmission node may use a reference sequence selected from the set. Here, the set of reference sequences used by a certain transmission node (terminal) may be determined in association with the Cell ID of the Cell in which the transmission node is located or may be determined for each terminal.

When such a set is used, the transmisson node may select a sequence to be used for transmission from the reference sequence set based on information to be included in a preamble to be transmitted. For example, selection is performed such that reference sequence 1 is used from the set (reference sequences 1 to N) when information on resources of a control signal / data signal is included in a preamble to be transmitted, and reference sequence 2 is used when information on resources is not included.

The transmission node may apply a cyclic shift to the reference sequence used for the preamble and transmit the cyclically shifted sequence. When cyclic shift is applied, the transmission node may change the phase rotation amount of cyclic shift in accordance with information included in the preamble. For example, the phase rotation amount is changed such that Cyclic shift = α is set when the information of the resource of the control signal / data signal is included in the preamble to be transmitted, and Cyclic shift = β is set when the information of the resource is not included. When there are N (N ≧ 2) candidates for the amount of phase rotation for a certain reference sequence and the reference sequence is used for the preamble, only some of the N candidates may be used for the amount of phase rotation.

Also, the transmission node may use a spreading code for the reference sequence to be used for a preamble. The transmission node may generate different transmission signal sequences as preambles by multiplying different spreading codes to one sequence. For example, when sequence A is used and there are spreading codes D1, D2, and D3, the transmission node can generate three preambles of sequence A × spreading code D1, sequence A × spreading code D2, and sequence A × spreading code D3.

According to the Example 3-1, it is possible to transmit various preambles according to purposes.

### < Example 3-2 : User Multiplexing>

In Example 3-2, since it is assumed that the transmission node that transmits the preamble is a terminal (user terminal), the node that transmits the preamble is referred to as a terminal here. However, this is an example, and the transmission node may be a base station. A terminal may also be referred to as a "user." In Example 3-2, "user multiplexing" for preambles transmitted from a plurality of terminals to be received by a reception node without collision will be described.

In Example 3-2, any one of "use of different reference sequences, cyclic shift, FDM, and FD-OCC" may be used as a user multiplexing method, or any two or more of them may be used. Hereinafter, use of different reference sequences, cyclic shift, FDM, and FD-OCC will be described as Examples 3-2-1 to 3-2-4, respectively. For convenience of description, Examples 3-2-1 to 3-2-4 are separately described, but a plurality of arbitrary Examples among them can be applied in combination.

### <Example 3-2-1>

In the Example 3-2-1, a different reference sequence is assigned to each user (terminal), and the terminal transmits a preamble using the assigned reference sequence.

Specifically, for example, from the base station 10 to the terminal, one or more indexes of sequences are notified by higher layer signaling. Alternatively, indexes of one or more sequences may be notified to the terminal by a signal transmitted from the base station 10 or another transmission node. In addition, only a part of all reference sequence candidates may be used as a reference sequence to be allocated to the terminal.

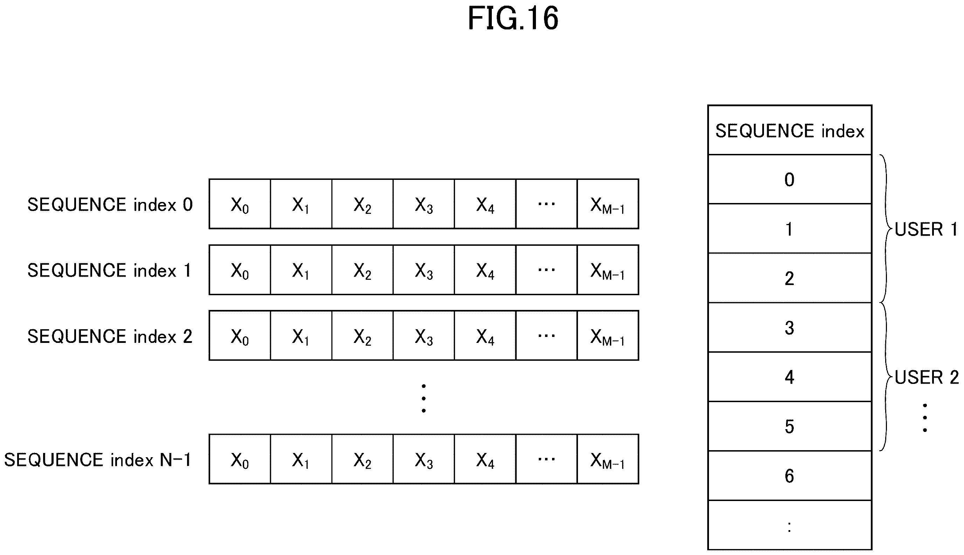

FIG. 16 shows an example of assignment. The left side of FIG. 16 illustrates that N sequences of sequences index 0 to N-1 are prepared as candidates as reference sequences. As an example, the right side of FIG. 16 shows that a plurality of sequence indexes are assigned to each user. Although a method of allocating a plurality of sequence indexes to one terminal is illustrated in the example of FIG. 16, one sequence index may be allocated to one terminal.

When a plurality of reference sequences are assigned to one user (terminal), a sequence to be used as a preamble to be actually transmitted may be defined by a specification as a default sequence, or a sequence to be used may be selected according to information notified in a preamble to be transmitted by a terminal.

### <Example 3-2-2>

In the Example 3-2-2, user multiplexing is performed by applying cyclic shift to a reference sequence. That is, a different phase rotation amount is assigned to each user (terminal), and each terminal transmits a preamble obtained by multiplying a reference sequence by the assigned phase rotation.

Specifically, for example, the base station 10 notifies the terminal of one or more phase rotation amounts to be used by the terminal through higher layer signaling. Alternatively, one or more phase rotation amounts may be notified to the terminal by a signal transmitted from the base station 10 or another transmission node. Alternatively, only a part of all the phase rotation amount candidates may be used as the phase rotation amount assigned to the terminal.

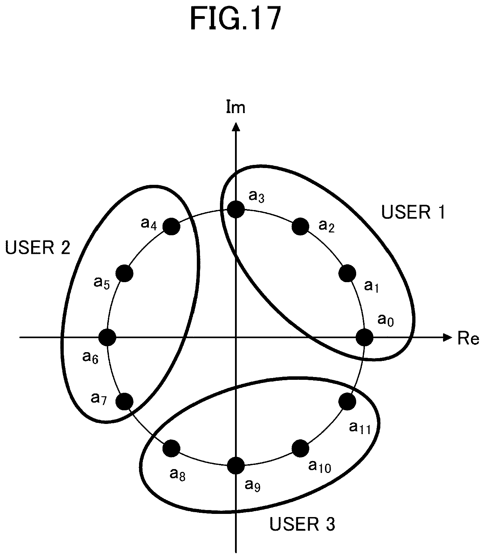

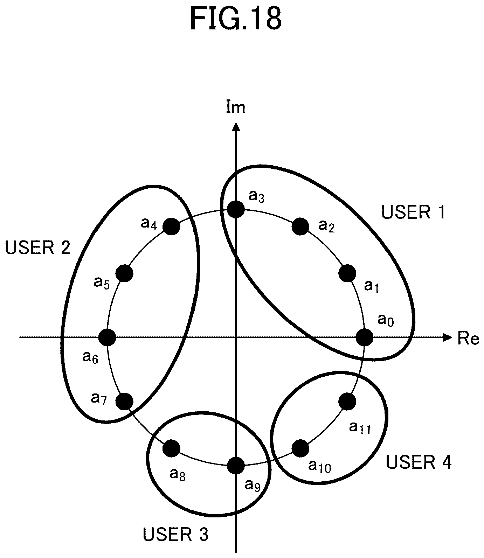

FIGS. 17 and 18 show examples of the phase rotation amount assigned to each user. In the examples of FIGS. 17 and 18, a method of allocating a plurality of phase rotation amounts to one terminal is illustrated, but one phase rotation amount may be allocated to one terminal.

When a plurality of phase rotation amounts are assigned to one user (terminal), the terminal can use a plurality of different transmission signal sequences as preambles. As to which sequence among a plurality of different sequences is used as a preamble to be actually transmitted, a phase rotation amount used as a default may be defined in the specification, or a phase rotation amount may be selected according to information notified in the preamble to be transmitted by the terminal.

### <Example 3-2-3>

In the Example 3-2-3, user multiplexing is performed by performing FDM in transmission resources of preambles. That is, a different frequency region for preamble transmission is assigned to each user (terminal), and the terminal transmits a preamble in the assigned frequency region.

For example, the base station 10 may notify the terminal of a frequency region assigned to the user by higher layer signaling, or the frequency region may be notified to the terminal by a signal transmitted from the base station 10 or another transmission node.

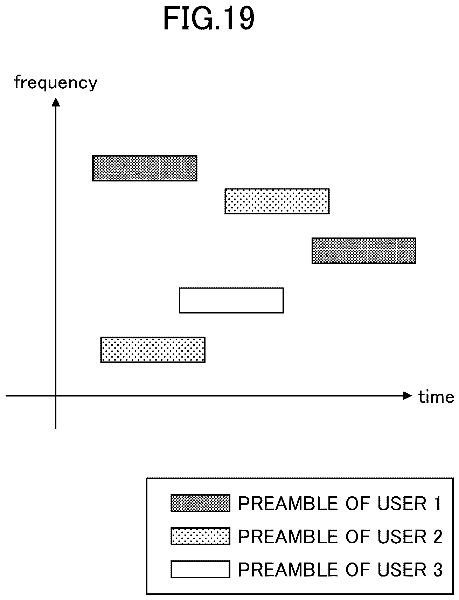

The unit of the frequency region to be allocated for preamble transmission may be any of BWP, CC, RB set, RB, REG, and RE, or may be a unit other than these. For example, a subchannel may be used as a unit. FIG. 19 shows an example of preambles of a plurality of users multiplexed by FDM.

As for a specific frequency region allocation method, start PRB index / start PRE index and bandwidth PRB size / bandwidth PRE size may be allocated, or frequency resources may be grouped in units of M PRBs / M PREs in advance and notified by a bit map. As an example, it is assumed that four PRBs form one group (M = 4) and there are 0th to third frequency resources in the group. In this case, if bitmap = 1010, it means that the first frequency resource and the 3rd frequency resource are allocated.

### <Example 3-2-4>

In the Example 3-2-4, user multiplexing is performed by applying FD-OCC to the reference sequence. That is, a different spreading code is assigned to each user (terminal), and each terminal transmits a preamble obtained by spreading a reference sequence with the assigned spreading code.

For example, the base station 10 notifies the terminal of one or more spreading codes to be used by the terminal through higher layer signaling. Alternatively, one or more spreading codes may be notified to the terminal by a signal transmitted from the base station 10 or another transmission node. Alternatively, only a part of all the spreading code candidates may be used as the spreading code assigned to the terminal.

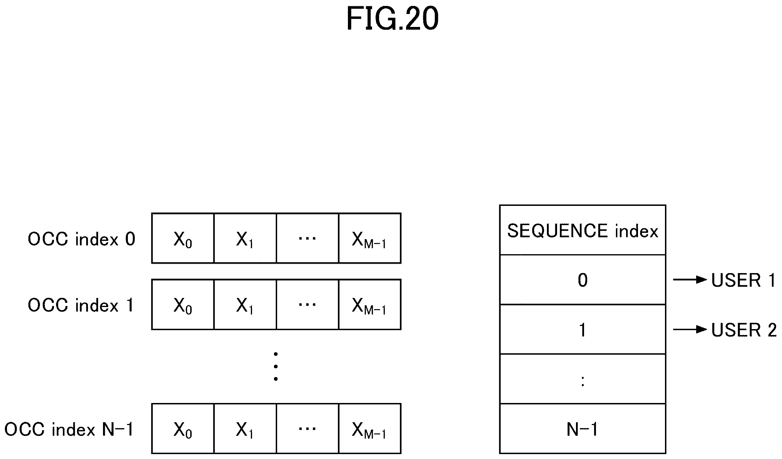

FIG. 20 shows an example of assignment. The left side of FIG. 20 indicates that N spreading codes of OCC index 0 to N-1 are prepared as candidates as spreading codes. As an example, the right side of FIG. 20 shows that one spreading code is assigned to each user. Although a method of allocating one spreading code to one terminal is illustrated in the example of FIG. 20, a plurality of spreading codes may be allocated to one terminal.

When a plurality of spreading codes are assigned to one user (terminal), which spreading code is to be used for a preamble to be actually transmitted may be defined by a specification as a default spreading code to be used, or may be selected according to information notified in a preamble to be transmitted by a terminal.

### <Example 3-3>

### - Notification Method

Regarding the method of notifying the sequence index of the reference sequence, the frequency domain resource allocation (FDRA), the cyclic shift index, and the spreading code described in the Examples 3-2-1 to 3-2-4, as described above, the base station 10 may notify the terminal of the sequence index, the frequency domain resource allocation (FDRA), the cyclic shift index, and the spreading code by higher layer signaling or a signal from the base station 10 or another transmission node.

As information to be notified, any one or any plurality of "the sequence index of the reference sequence, the FDRA, the Cyclic Shift index, and the spreading code" may be notified. When a plurality of them are notified, a combination may be defined in the specification.

### - Subcarrier spacing (SCS) of preamble

The SCS of the preamble used in the present embodiment may be an SCS (15 / 30 / 60 / 120 / 240 / 480 / 960kHz) similar to SCS used in FR1, FR2, or above 52. 6GHz, or may be other values.

The SCS of the preamble may be the same as or different from SCS in a control signal, a reference signal, a feedback signal or a data signal.

As for the method of specifying the SCS of the preamble, a default value may be defined in the specification, or may be specified by higher layer signaling from the base station 10 to the terminal, for example.

### - Preamble sequence length

The sequence length of the preamble used in the present embodiment may be defined as a constant value in the specification or may be changed semi-statically / dynamically. The semi-static/dynamic change may be notified by, for example, higher layer signaling from the base station 10 to the terminal or a signal from another transmission node. Option 1 and option 2 for determining the sequence length of the preamble are described below.

Option 1) A transmission node that transmits a preamble may determine a sequence length of the preamble in accordance with a frequency resource of a transmission signal to which the preamble is to be added.

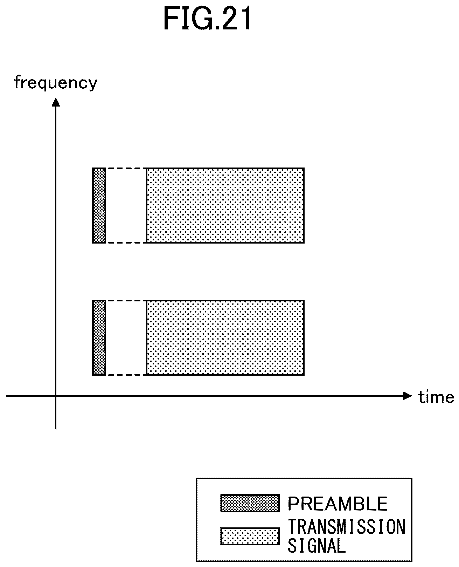

For example, the transmission node that transmits a preamble may determine the sequence length of the preamble in accordance with a band in which LBT is performed. An example is shown in FIG. 21. As shown in FIG. 21, in this example, a preamble band (sequence length) and a band of the transmission signal (i.e., the band in which LBT is performed) are the same.

Option 2) A correspondence relationship between a preamble and a resource of a transmission signal to which the preamble is to be added may be defined in a specification. In this case, the transmission node that transmits the preamble determines the band (sequence length) of the preamble in accordance with the definition.

With regard to this correspondence relationship, one transmission signal resource may correspond to one preamble, or a plurality of transmission signal resources may correspond to one preamble. For example, one transmission signal resource may correspond to one preamble when the sequence length is less than the threshold L (or equal to or less than L, or equal to or greater than L), and a plurality of (N) transmission signal resources may correspond to one preamble otherwise. L and N may be defined by the specification or may be changed semi-statically / dynamically.

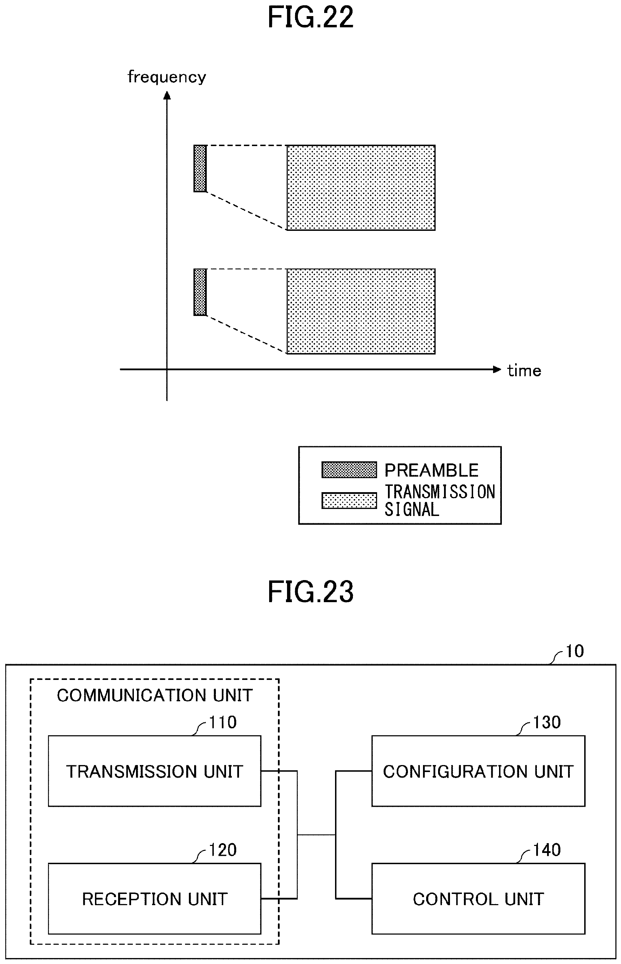

For example, in LBT for avoiding a collision with another terminal in the system instead of LBT considering coexistence with another system, even if the preamble band and the transmission signal band do not coincide with each other, a rule may be determined in the specification. FIG. 22 shows an example of such a case, in which the preamble band is narrower than the transmission signal band. For example, a rule that the preamble band is 1/R of the transmission signal band may be defined. R is a positive real number.

### (Example 4)

In the present embodiment, examples of information to be notified using a preamble are as follows. The transmission node that transmits the preamble may notify any one or any plurality of the following in the preamble.

### - Transmission node ID, destination reception node ID, information of data signal, information of control signal

The information of the data signal is, for example, resource information, or information related to demodulation, or both resource information and information related to demodulation. The resource information is, for example, any one or any plurality of FDRA / TDRA, COT duration, and resource information of a data signal after the preamble assigned data signal. The information related to demodulation is, for example, any one or any plurality of MCS, SCS, waveform, antenna port, and beam information (TCI state).

The information of the control signal is, for example, resource information, information related to demodulation, or both resource information and information related to demodulation. The resource information may be, for example, one or more of FDRA / TDRA (e.g., CORESET, search space information) and COT duration. The information related to demodulation is, for example, any one or any plurality of MCS, SCS, waveform, antenna port, beam information (TCI state), and aggregation level. Note that information to be included in the preamble may be defined by specifications, or may be notified / designated from the base station or another transmission node to the terminal and changed semi-statically / dynamically.

The terminal may notify the base station 10 of capability information indicating whether or not communication using the preamble is possible by the terminal. The base station 10 may perform communication based on the same scheduling as in the related art with respect to a terminal incapable of performing communication using a preamble.

As described above, according to the techniques described in the Examples 1-4, it is possible to control communication using a preamble in a wireless communication system.

### (Apparatus configuration)

Next, a functional configuration example of the base station 10 and the terminal 20 for performing the processes and operations described above will be described. The base station 10 and the terminal 20 include functions for implementing the above-described Examples. However, the base station 10 and the terminal 20 may each comprise only the functions of any one of Examples. Both the base station 10 and the terminal 20 may perform an operation of a transmission node and an operation of a reception node. The base station 10 and the terminal 20 may be collectively referred to as a communication apparatus.

### <Base station 10>

Fig. 23 is a diagram illustrating an example of a functional configuration of the base station 10. As shown in Fig. 23, the base station 10 includes a transmission unit 110, a reception unit 120, a setting unit 130, and a control unit 140. The functional configuration shown in FIG. 16 is only one example. If the operation according to the embodiments of the present invention can be performed, the function category and the name of the function unit may be any one. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. The transmission unit 110 has a function to transmit NR-PSS, NR-SSS, NR-PBCH, DL/UL control signals, DL data, and the like to the terminal 20. The transmission unit 110 transmits configuration information and the like described in Examples.

The configuration unit 130 stores preconfigured configuration information and various configuration information to be transmitted to the terminal 20 in the storage device and reads the preconfigured configuration information from the storage device if necessary. The control unit 140 performs, for example, overall control of the base station 10 including control related to signal transmission and reception and control related to LBT. A function unit related to signal transmission in the control unit 140 may be included in the transmission unit 110, and a function unit related to signal reception in the control unit 140 may be included in the reception unit 120. The transmission unit 110 and the reception unit 120 may be called a transmitter and a receiver, respectively.

### <Terminal 20>

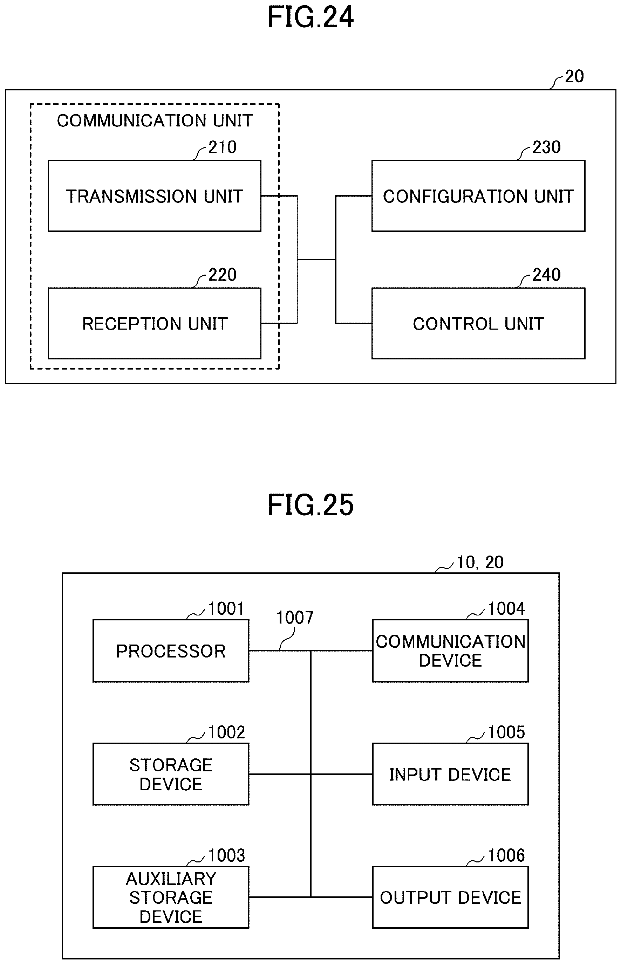

Fig. 24 is a diagram illustrating an example of a functional configuration of the terminal 20. As shown in FIG. 24, the terminal 20 includes a transmission unit 210, a reception unit 220, a configuration unit 230, and a control unit 240. The functional configuration shown in Fig. 24 is only one example. If the operation according to the embodiments of the present invention can be performed, the function category and the name of the function unit may be any one. The transmission unit 210 and the reception unit 220 may be called a communication unit.

The transmission unit 210 creates a transmission signal from the transmission data and wirelessly transmits the transmission signal. The reception unit 220 receives various signals wirelessly and acquires signals from higher layers from the received signal of the physical layer. Further, the transmission unit 210 transmits HARQ-ACK, and the reception unit 220 receives the configuration information and the like described in the embodiments.

The configuration unit 230 stores various configuration information received from the base station 10 by the reception unit 220 in the storage device and reads it from the storage device as necessary. The configuration unit 230 also stores preconfigured configuration information. The control unit 240 performs overall control of the terminal 20 including control related to signal transmission and reception and control related to LBT. A function unit related to signal transmission in the control unit 240 may be included in the transmission unit 210, and a function unit related to signal reception in the control unit 240 may be included in the reception unit 220. The transmission unit 210 and the reception unit 220 may be called a transmitter and a receiver, respectively.

### (Hardware configuration)

The block diagrams (Fig. 23 and Fig. 24) used in the description of the embodiment described above illustrate the block of functional unit. Such function blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions transmission is referred to as the transmitting unit or the transmitter. As described above, the attainment method thereof is not particularly limited.

For example, the base station 10, the terminal 20, and the like in one embodiment of this disclosure may function as a computer for performing the processing of a radio communication method of this disclosure. Fig. 25 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. For example, the control unit 140 of the base station 10 illustrated in Fig. 23 may be attained by a control program that is stored in the storage device 1002 and is operated by the processor 1001. In addition, for example, the control unit 240 of the terminal 20 illustrated in Fig. 24 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

### (Summary of Embodiments)

In this specification, at least the following communication apparatus and method are disclosed. Reception-related terms are as follows.

### (Item 1)

A communication apparatus including:
a reception unit configured to detect a preamble transmitted from a transmission node; and
a control unit configured to determine a demodulation operation for a received signal according to whether information related to a destination is included in the preamble.

### (Item 2)

The communication apparatus as described in item 1,
wherein the reception unit performs correlation detection of the preamble when received power is detected.

### (Item 3)

The communication apparatus as described in item 1 or 2,
wherein, when the information related to a destination is not included in the preamble, the control unit specifies a resource of a signal to receive after the preamble, and performs demodulation.

### (Item 4)

The communication apparatus as described in any one of items 1 to 3,
wherein, when the information related to a destination is included in the preamble, the control unit determines a demodulation operation for a signal to receive after the preamble according to whether the preamble is addressed to the communication apparatus.

### (Item 5)

The communication apparatus as described in any one of claims 1 to 4,
wherein the reception unit specifies a resource of a signal to receive after the preamble by using the preamble.

### (Item 6)

A reception method executed by a communication apparatus, including:
detecting a preamble transmitted from a transmission node; and
determining a demodulation operation for a received signal according to whether information related to a destination is included in the preamble.

According to any of the above items, it is possible to control communication using a preamble in a wireless communication system. In particular, the second term enables efficient preamble reception. According to the third term, the transmission state of the other node can be grasped. According to the fourth item, it is possible to perform control depending on whether or not the preamble is addressed to itself. According to the fifth term, the resource of the signal can be appropriately grasped.

Transmission-related terms are as follows:
(Item 1) A communication apparatus including:
   a control unit configured to include, in a preamble, information of a resource of a signal to which the preamble is added, or to determine a resource, as a resource to be used for transmission of the preamble, for notifying a resource of the signal; and
   a transmission unit configured to transmit the preamble.
(Item 2) The communication apparatus as described in item 1,
   wherein the transmission unit adds a preamble to a signal of initial transmission, and does not add a preamble to a signal other than initial transmission.
(Item 3) The communication apparatus as described in item 2,
   wherein the transmission unit notifies a transmission resource of a second signal by a first signal to be transmitted before the second signal that is a signal other than initial transmission.
(Item 4) The communication apparatus as described in any one of items 1 to 3,
   wherein the transmission unit determines, based on information to be included in the preamble, a sequence in the preamble, a phase rotation amount of cyclic shift in the preamble, or a spreading code in the preamble.
(Item 5) The communication apparatus as described in any one of items 1 to 4,
   wherein the transmission unit transmits the preamble by using a sequence of a plurality of sequences which are different for each user, a cyclic shift of a plurality of cyclic shifts which are different for each user, a frequency resource of a plurality of frequency resources which are different for each user, or a spreading code of a plurality of spreading codes which are different for each user.
(Item 6) A transmission method executed by a communication apparatus, including:
   including, in a preamble, information of a resource of a signal to which the preamble is added, or determining a resource, as a resource to be used for transmission of the preamble, for notifying a resource of the signal; and
   transmitting the preamble.

According to any of the above items, it is possible to control communication using a preamble in a wireless communication system. In particular, according to the second term, for example, when signals are continuously transmitted, efficient transmission can be performed. According to the third term, the transmission resource can be appropriately notified. According to the fourth term, for example, the receiving side can quickly grasp the information notified by the preamble. According to the fifth item, user multiplexing can be appropriately performed.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the terminal in this disclosure may be replaced with the base station. In this case, the function of the user terminal described above may be provided in the base station.

The terms "determining" and "determining" used in this disclosure may involve diverse operations. "Determining" and "determining", for example, may include deeming judging, calculating, computing, processing, deriving, investigating, looking up (search, inquiry) (for example, looking up in a table, a database, or another data structure), and ascertaining, as "determining" and "determining". In addition, "determining" and "determining" may include deeming receiving (for example, receiving information), transmitting (for example, transmitting information), input, output, and accessing (for example, accessing data in a memory), as "determining" and "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe.

Here, TTI, for example, indicates minimum time unit of scheduling in radio communication. For example, in an LTE system, the base station performs scheduling for allocating a radio resource (a frequency bandwidth, transmission power, and the like that can be used in each of the terminals 20) in TTI unit, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it may not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

In the present disclosure, each of the base station 10 and the terminal 20 is an example of a transmission node.

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### [Description of Symbols]

10 base station
110 transmission unit
120 reception unit
130 configuration unit
140 control unit
20 terminal
210 transmission unit
220 reception unit
230 configuration unit
240 control unit
30 core network
1001 processor
1002 storage device
1003 auxiliary storage device
1004 communication device
1005 input device
1006 output device

## Claims

1. A communication apparatus comprising:
a control unit configured to include, in a preamble, information of a resource of a signal to which the preamble is added, or to determine a resource, as a resource to be used for transmission of the preamble, for notifying a resource of the signal; and
a transmission unit configured to transmit the preamble.

2. The communication apparatus as claimed in claim 1,
wherein the transmission unit adds a preamble to a signal of initial transmission, and does not add a preamble to a signal other than initial transmission.

3. The communication apparatus as claimed in claim 2,
wherein the transmission unit notifies a transmission resource of a second signal by a first signal to be transmitted before the second signal that is a signal other than initial transmission.

4. The communication apparatus as claimed in any one of claims 1 to 3,
wherein the transmission unit determines, based on information to be included in the preamble, a sequence in the preamble, a phase rotation amount of cyclic shift in the preamble, or a spreading code in the preamble.

5. The communication apparatus as claimed in any one of claims 1 to 4,
wherein the transmission unit transmits the preamble by using a sequence of a plurality of sequences which are different for each user, a cyclic shift of a plurality of cyclic shifts which are different for each user, a frequency resource of a plurality of frequency resources which are different for each user, or a spreading code of a plurality of spreading codes which are different for each user.

6. A transmission method executed by a communication apparatus, comprising:
including, in a preamble, information of a resource of a signal to which the preamble is added, or determining a resource, as a resource to be used for transmission of the preamble, for notifying a resource of the signal; and
transmitting the preamble.
